# EUROPEAN PATENT APPLICATION

(11) **EP 3 024 241 A1**
(43) Date of publication of application: **25.05.2016**
(21) Application number: 14826265.2
(22) Date of filing: 18.07.2014
(51) Int. Cl.: H04N 19/597, H04N 19/51

(54) **METHOD AND APPARATUS FOR PROCESSING VIDEO SIGNAL**

(30) Priority: 18.07.2013 US 201361856024 P; 18.07.2013 US 201361856026 P; 18.07.2013 US 201361856027 P; 18.07.2013 US 201361856030 P
(71) Applicant: LG Electronics Inc., Seoul 150-721 (KR)
(72) Inventor: NAM, Junghak, Seoul 137-893 (KR); YEA, Sehoon, Seoul 137-893 (KR); KIM, Taesup, Seoul 137-893 (KR); YOO, Sunmi, Seoul 137-893 (KR); JUNG, Jiwook, Seoul 137-893 (KR); HEO, Jin, Seoul 137-893 (KR)
(74) Representative: Diehl & Partner GbR
(86) International application number: PCT/KR2014/006523
(87) International publication number: WO 2015/009091

(57) **Abstract**

The present invention relates to a method and an apparatus for processing a video signal, capable of: obtaining a temporary inter-view motion vector corresponding to a first unit; obtaining virtual depth information corresponding to the first unit by using the temporary inter-view motion vector; obtaining an inter-view motion vector corresponding to the first unit by using the virtual depth information corresponding to the first unit; and updating the inter-view motion vector corresponding to the first unit.

## Description

### METHOD AND APPARATUS FOR PROCESSING VIDEO SIGNAL

### [Technical Field]

The present invention relates to a method and device for processing a video signal.

### [Background Art]

Compression refers to a signal processing technique for transmitting digital information through a communication line or storing the digital information in a form suitable for a storage medium. Compression targets include audio, video and text information. Particularly, a technique of compressing images is called video compression. Multiview video has characteristics of spatial redundancy, temporal redundancy and inter-view redundancy.

### [Disclosure]

### [Technical Problem]

An object of the present invention is to improve video signal coding efficiency.

### [Technical Solution]

The present invention uses only one piece of depth information even if a plurality of pieces of depth information is present in a warping process using depth information in view synthesis prediction.

In addition, the present invention obtains an inter-view motion vector used for the warping process using a temporary inter-view motion vector.

The present invention updates the obtained inter-view motion vector and uses the updated inter-view motion vector in the future.

Furthermore, the present invention performs the warping process using a predetermined inter-view motion vector transmitted from an encoder.

The technical problems solved by the present invention are not limited to the above technical problems and those skilled in the art may understand other technical problems from the following description.

### [Advantageous Effects]

The present invention can increase view synthesis prediction accuracy by preventing change of the order of reference blocks or increase in an interval between reference blocks using only one piece of depth information even if a plurality of pieces of depth information is present in a warping process using depth information in view synthesis prediction.

In addition, the present invention can obtain an accurate inter-view motion vector of a unit used for the warping process by using a temporary inter-view motion vector.

Furthermore, the present invention can update the obtained inter-view motion vector so as to acquire an accurate inter-view motion vector of a unit used for the warping process.

The present invention can obtain an accurate inter-view motion vector of a unit used for the warping process by performing the warping process using a predetermined inter-view motion vector transmitted from an encoder.

It will be appreciated by persons skilled in the art that that the effects that can be achieved through the present invention are not limited to what has been particularly described hereinabove and other advantages of the present invention will be more clearly understood from the following detailed description.

### [Description of Drawings]

FIG. 1 is a block diagram of a broadcast receiver to which depth coding is applied according to an embodiment of the present invention.
FIG. 2 is a block diagram of a video decoder according to an embodiment of the present invention.
FIG. 3 is a flowchart illustrating exemplary view synthesis prediction according to an embodiment of the present invention.
FIG. 4 illustrates an example of obtaining virtual reference blocks using reference blocks and depth blocks.
FIG. 5a illustrates an example in which the order of virtual reference blocks obtained using reference blocks and depth blocks is inverted.
FIG. 5b illustrates an example in which an interval between virtual reference blocks obtained using reference blocks and depth blocks increases.
FIG. 6 is a flowchart illustrating an exemplary method for obtaining a virtual reference picture of view synthesis prediction according to an embodiment of the present invention.
FIG. 7 illustrates an exemplary warping method of view synthesis prediction according to an embodiment of the present invention.
FIG. 8 is a flowchart illustrating an example of an inter-view motion vector of an N-th unit using virtual depth information according to an embodiment of the present invention.
FIG. 9 illustrates an example of obtaining an inter-view motion vector of an N-th unit using virtual depth information according to an embodiment of the present invention.
FIG. 10 is a flowchart illustrating an example of updating an inter-view motion vector according to an embodiment of the present invention.

### [Best Mode]

The present invention provides a method and an apparatus for processing video signals, which obtain a temporary inter-view motion vector corresponding to a first unit, obtain virtual depth information corresponding to the first unit using the temporary inter-view motion vector, obtain an inter-view motion vector corresponding to the first unit using the virtual depth information corresponding to the first unit and update the inter-view motion vector corresponding to the first unit.

The temporary inter-view motion vector is obtained using an inter-view motion vector corresponding to a neighboring unit of the first unit.

The virtual depth information is depth information of a depth block of a view different from the first unit.

The method and apparatus for processing video signals obtain an inter-view motion vector corresponding to a second unit using the updated inter-view motion vector.

The method and apparatus for processing video signals obtain a temporary inter-view motion vector corresponding to a second unit using the inter-view motion vector corresponding to the first unit, obtain virtual depth information corresponding to the second unit using the temporary inter-view motion vector corresponding to the second unit, and obtain an inter-view motion vector corresponding to the second unit using the virtual depth information corresponding to the second unit.

The method and apparatus for processing video signals update the inter-view motion vector corresponding to the second unit.

The method and apparatus for processing video signals obtain a first virtual reference block using the inter-view motion vector corresponding to the first unit, wherein the first virtual reference block is included in a virtual reference picture for view synthesis prediction.

### [Modes for Invention]

Techniques for compressing or decoding multiview video signal data consider spatial redundancy, temporal redundancy and inter-view redundancy. In the case of a multiview image, multiview texture images captured at two or more views can be coded in order to generate a three-dimensional image. Furthermore, depth data corresponding to the multiview texture images may be coded as necessary. The depth data can be compressed in consideration of spatial redundancy, temporal redundancy or inter-view redundancy. Depth data is information on the distance between a camera and a corresponding pixel. The depth data can be flexibly interpreted as depth related information such as depth information, a depth image, a depth picture, a depth sequence and a depth bitstream in the specification. In addition, coding can include both the concepts of encoding and decoding in the specification and can be flexibly interpreted within the technical spirit and technical scope of the present invention.

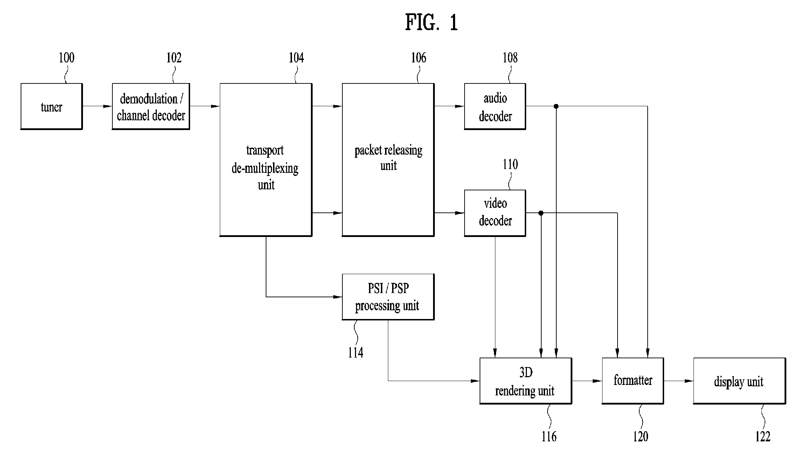

FIG. 1 is a block diagram of a broadcast receiver to which depth coding is applied according to an embodiment to which the present invention is applied.

The broadcast receiver according to the present embodiment receives terrestrial broadcast signals to reproduce images. The broadcast receiver can generate three-dimensional content using received depth related information. The broadcast receiver includes a tuner 100, a demodulator/channel decoder 102, a transport demultiplexer 104, a depacketizer 106, an audio decoder 108, a video decoder 110, a PSI/PSIP processor 114, a 3D renderer 116, a formatter 120 and a display 122.

The tuner 100 selects a broadcast signal of a channel tuned to by a user from among a plurality of broadcast signals input through an antenna (not shown) and outputs the selected broadcast signal. The demodulator/channel decoder 102 demodulates the broadcast signal from the tuner 100 and performs error correction decoding on the demodulated signal to output a transport stream TS. The transport demultiplexer 104 demultiplexes the transport stream so as to divide the transport stream into a video PES and an audio PES and extract PSI/PSIP information. The depacketizer 106 depacketizes the video PES and the audio PES to restore a video ES and an audio ES. The audio decoder 108 outputs an audio bitstream by decoding the audio ES. The audio bitstream is converted into an analog audio signal by a digital-to-analog converter (not shown), amplified by an amplifier (not shown) and then output through a speaker (not shown). The video decoder 110 decodes the video ES to restore the original image. The decoding processes of the audio decoder 108 and the video decoder 110 can be performed on the basis of a packet ID (PID) confirmed by the PSI/PSIP processor 114. During the decoding process, the video decoder 110 can extract depth information. In addition, the video decoder 110 can extract additional information necessary to generate an image of a virtual camera view, for example, camera information or information for estimating an occlusion hidden by a front object (e.g. geometrical information such as object contour, object transparency information and color information), and provide the additional information to the 3D renderer 116. However, the depth information and/or the additional information may be separated from each other by the transport demultiplexer 104 in other embodiments of the present invention.

The PSI/PSIP processor 114 receives the PSI/PSIP information from the transport demultiplexer 104, parses the PSI/PSIP information and stores the parsed PSI/PSIP information in a memory (not shown) or a register so as to enable broadcasting on the basis of the stored information. The 3D renderer 116 can generate color information, depth information and the like at a virtual camera position using the restored image, depth information, additional information and camera parameters.

In addition, the 3D renderer 116 generates a virtual image at the virtual camera position by performing 3D warping using the restored image and depth information regarding the restored image. While the 3D renderer 116 is configured as a block separated from the video decoder 110 in the present embodiment, this is merely an example and the 3D renderer 116 may be included in the video decoder 110.

The formatter 120 formats the image restored in the decoding process, that is, the actual image captured by a camera, and the virtual image generated by the 3D renderer 116 according to the display mode of the broadcast receiver such that a 3D image is displayed through the display 122. Here, synthesis of the depth information and virtual image at the virtual camera position by the 3D renderer 116 and image formatting by the formatter 120 may be selectively performed in response to a user command. That is, the user may manipulate a remote controller (not shown) such that a composite image is not displayed and designate an image synthesis time.

As described above, the depth information for generating the 3D image is used by the 3D renderer 116. However, the depth information may be used by the video decoder 110 in other embodiments. A description will be given of various embodiments in which the video decoder 110 uses the depth information.

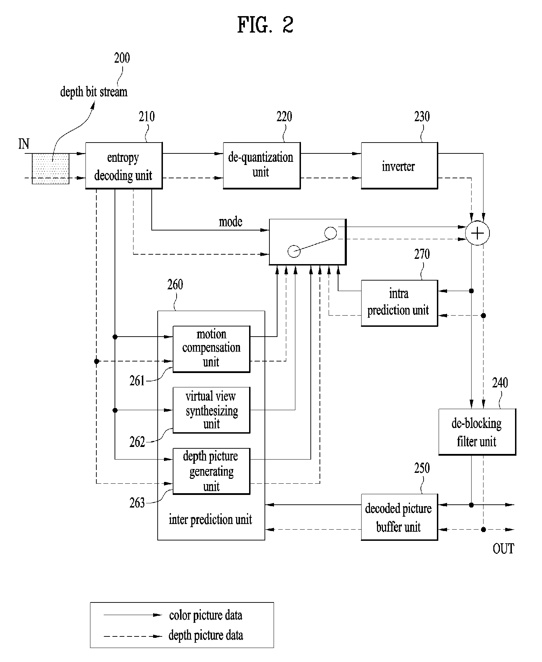

FIG. 2 is a block diagram of the video decoder according to an embodiment to which the present invention is applied.

Referring to FIG. 2, the video decoder 110 may include an entropy decoding unit 210, an inverse quantization unit 220, an inverse transform unit 230, an in-loop filter unit 240, a decoded picture buffer unit 250, an inter-prediction unit 260 and an intra-prediction unit 270. In FIG. 2, solid lines represent flow of color picture data and dotted lines represent flow of depth picture data. While the color picture data and the depth picture data are separately represented in FIG. 2, separate representation of the color picture data and the depth picture data may refer to separate bitstreams or separate flows of data in one bitstream. That is, the color picture data and the depth picture data can be transmitted as one bitstream or separate bitstreams. FIG. 2 only shows data flows and does not limit operations to operations performed in one decoder.

First of all, to decode a received depth bitstream 200, the depth bitstream 200 is parsed per NAL. Here, various types of attribute information regarding depth may be included in an NAL header region, an extended region of the NAL header, a sequence header region (e.g. sequence parameter set), an extended region of the sequence header, a picture header region (e.g. picture parameter set), an extended region of the picture header, a slice header region, an extended region of the slice header, a slice data region or a macro block region. While depth coding may be performed using a separate codec, it may be more efficient to add attribute information regarding depth only in the case of depth bitstream if compatibility with existing codecs is achieved. For example, depth identification information for identifying a depth bitstream can be added to the sequence header region (e.g. sequence parameter set) or the extended region of the sequence header. Attribute information regarding a depth sequence can be added only when an input bitstream is a depth coded bitstream, according to the depth identification information.

The parsed depth bitstream 200 is entropy-decoded through the entropy decoding unit 210 and a coefficient, a motion vector and the like of each macro block are extracted. The inverse quantization unit 220 multiplies a received quantized value by a predetermined constant so as to obtain a transformed coefficient and the inverse transform unit 230 inversely transforms the coefficient to restore depth information of a depth picture. The intra-prediction unit 270 performs intra-prediction using the restored depth information of the current depth picture. The deblocking filter unit 240 applies deblocking filtering to each coded macro block in order to reduce block distortion. The deblocking filter unit improves the texture of a decoded frame by smoothing edges of blocks. A filtering process is selected depending on boundary strength and an image sample gradient around a boundary. Filtered depth pictures are output or stored in the decoded picture buffer unit 250 to be used as reference pictures.

The decoded picture buffer unit 250 stores or opens previously coded depth pictures for inter prediction. Here, to store coded depth pictures in the decoded picture buffer unit 250 or to open stored coded depth pictures, frame_num and POC (Picture Order Count) of each picture are used. Since the previously coded pictures may include depth pictures corresponding to views different from the current depth picture, depth view information for identifying views of depth pictures as well as frame_num and POC can be used in order to use the previously coded pictures as reference pictures in depth coding.

In addition, the decoded picture buffer unit 250 may use the depth view information in order to generate a reference picture list for inter-view prediction of depth pictures. For example, the decoded picture buffer unit 250 can use depth-view reference information. The depth-view reference information refers to information used to indicate dependence between views of depth pictures. For example, the depth-view reference information may include the number of depth views, a depth view identification number, the number of depth-view reference pictures, depth view identification numbers of depth-view reference pictures and the like.

The decoded picture buffer unit 250 manages reference pictures in order to implement more flexible inter-prediction. For example, a memory management control operation method and a sliding window method can be used. Reference picture management unifies a reference picture memory and a non-reference picture memory into one memory and manages the unified memory so as to achieve efficient management with a small-capacity memory. In depth coding, depth pictures can be separately marked to be discriminated from color pictures in the decoded picture buffer unit and information for identifying each depth picture can be used in the marking process. Reference pictures managed through the aforementioned procedure can be used for depth coding in the inter-prediction unit 260.

Referring to FIG. 2, the inter-prediction unit 260 may include a motion compensation unit 261, a virtual view synthesis unit 262 and a depth picture generation unit 263.

The motion compensation unit 261 compensates for motion of the current block using information transmitted from the entropy decoding unit 210. The motion compensation unit 261 extracts motion vectors of neighboring blocks of the current block from a video signal and acquires a motion vector prediction value of the current block. The motion compensation unit 261 compensates for motion of the current block using the motion vector prediction value and a differential vector extracted from the video signal. Motion compensation may be performed using one reference picture or a plurality of pictures. In depth coding, motion compensation can be performed using information on a reference picture list for inter-view prediction of depth pictures stored in the decoded picture buffer unit 250 when the current depth picture refers to a depth picture of a different view. Further, motion compensation may be performed using depth view information for identifying the view of the depth picture.

The virtual view synthesis unit 262 synthesizes a color picture of a virtual view using color pictures of neighboring views of the view of the current color picture. To use the color pictures of the neighboring views or to use color pictures of a desired specific view, view identification information indicating the views of the color pictures can be used. When the color picture of the virtual view is generated, flag information indicating whether the color picture of the virtual view is generated can be defined. When the flag information indicates generation of the color picture of the virtual view, the color picture of the virtual view can be generated using the view identification information. The color picture of the virtual view, acquired through the virtual view synthesis unit 262, may be used as a reference picture. In this case, the view identification information can be assigned to the color picture of the virtual view.

In another embodiment, the virtual view synthesis unit 262 can synthesize a depth picture of a virtual view using depth pictures corresponding to neighboring views of the view of the current depth picture. In this case, depth view identification information indicating the view of a depth picture can be used. Here, the depth view identification information can be derived from view identification information of a corresponding color picture. For example, the corresponding color picture can have the same picture output order information and the same view identification information as the current depth picture.

The depth picture generation unit 263 can generate the current depth picture using depth coding information. Here, the depth coding information may include a distance parameter indicating a distance between a camera and an object (e.g. a Z-coordinate value on a camera coordinate system or the like), macro block type information for depth coding, information for identifying a boundary in a depth picture, information indicating whether data in RBSP includes depth-coded data, information indicating whether a data type is depth picture data, color picture data or parallax data and the like. In addition, the current depth picture may be predicted using the depth coding information. That is, inter prediction using neighboring depth pictures of the current depth picture can be performed and intra prediction using decoded depth information in the current depth picture can be performed.

There are disparity compensated prediction (DCP) and view synthesis prediction (VSP) as inter-view prediction methods for decoding multiview images.

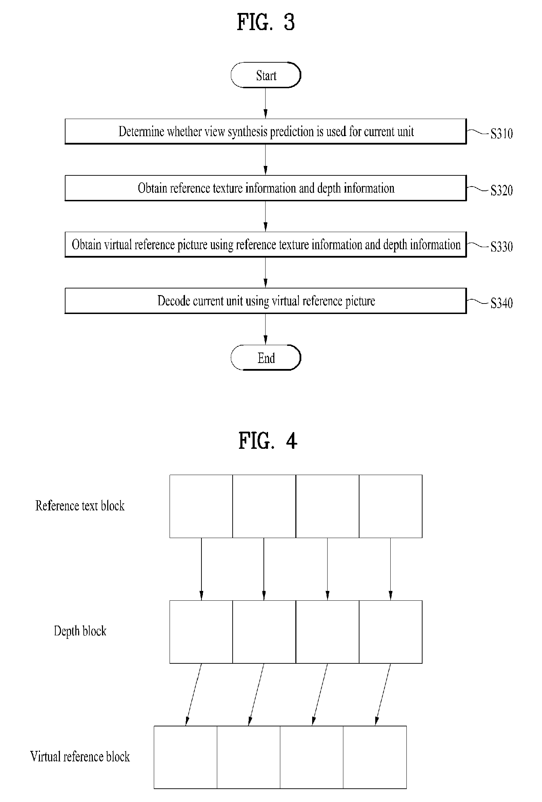

View synthesis prediction is a prediction method that warps blocks in a text picture using depth information and uses the warped blocks as a virtual reference picture for decoding a current unit and may be performed as shown in FIG. 3.

FIG. 3 is a flowchart illustrating exemplary view synthesis prediction according to an embodiment of the present invention.

Whether the current unit uses view synthesis prediction may be determined (S310). Here, the current unit can refer to an arbitrary unit in a multiview image to be decoded. To determine whether the current unit uses view synthesis prediction, prediction information of the current unit, which indicates a prediction method of the current unit may be obtained. When the prediction information of the current unit indicates view synthesis prediction, view synthesis prediction for the current unit may be performed.

Reference texture information and depth information for view synthesis prediction may be obtained (S320). Here, the reference texture information can refer to a reference picture within a reference view corresponding to a neighboring view of the current unit. The reference picture can be present in a view different from a picture including the current unit while being at the same time as the picture. The depth information can refer to depth information present in the same view as the current unit or depth information present in the reference view corresponding to a neighboring view of the current unit.

A virtual reference picture may be obtained using the reference texture information and the depth information (S330). An inter-view motion vector may be obtained using the depth information. The virtual reference picture may be obtained using the inter-view motion vector and the reference texture information per pixel or block.

The current unit may be decoded using the virtual reference picture (S340). For example, pixel values of a unit in the virtual reference picture, which corresponds to the current unit, can be obtained as prediction values of the current unit.

The present invention proposes a method for obtaining depth information used for view synthesis prediction and a method for warping a virtual reference picture using reference texture information and depth information to increase view synthesis prediction accuracy.

In a multiview image, one prediction unit may be prediction blocks having the same or similar characteristics. For example, one prediction unit can have similar colors and similar motion information. Prediction blocks (units) in one texture picture may have similar depth information. Accordingly, when view synthesis prediction is used in a process of decoding a prediction block, a depth block corresponding to the prediction block may include one depth layer. When the depth block corresponding to the prediction block includes one depth layer, virtual reference blocks may be obtained at predetermined intervals using depth blocks (or virtual depth blocks) corresponding to reference texture blocks in a reference texture picture, as shown in FIG. 4

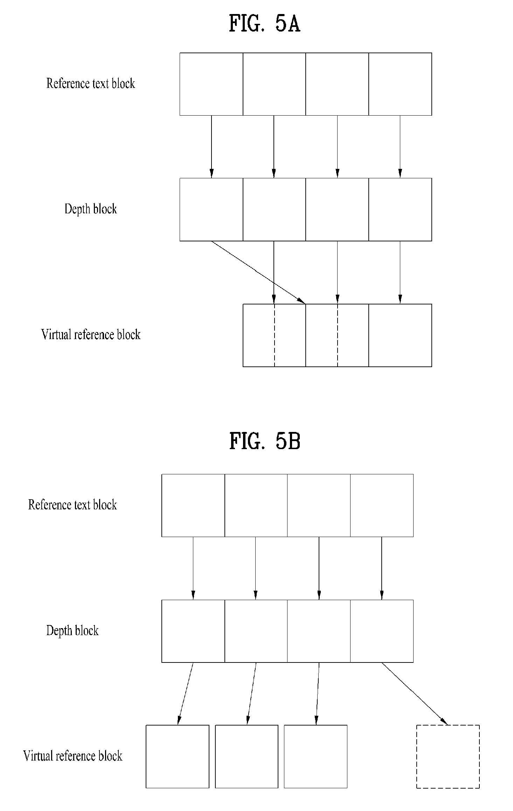

However, when a depth block corresponding to a prediction unit includes a plurality of depth layers in a decoding process, view synthesis prediction accuracy may be deteriorated. If a plurality of depth layers is present in the depth block corresponding to the prediction unit, the order of virtual reference blocks (units) in a virtual reference picture may be changed, as shown in FIG. 5a, or an interval between virtual reference blocks in the virtual reference picture may increase, as shown in FIG.5b. When the current unit is predicted using the virtual reference picture including virtual reference blocks in changed order or having an increased interval, it is difficult to obtain accurate prediction values.

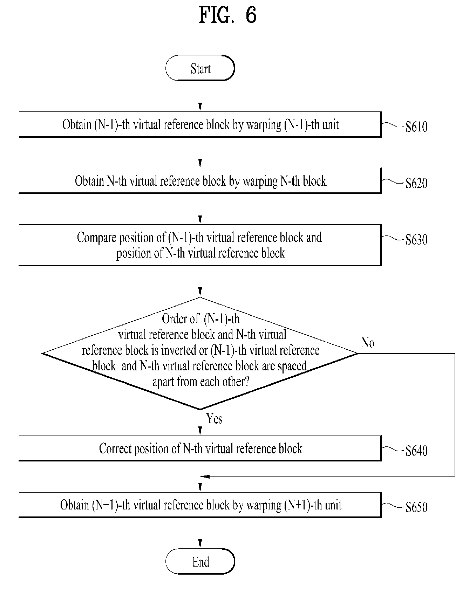

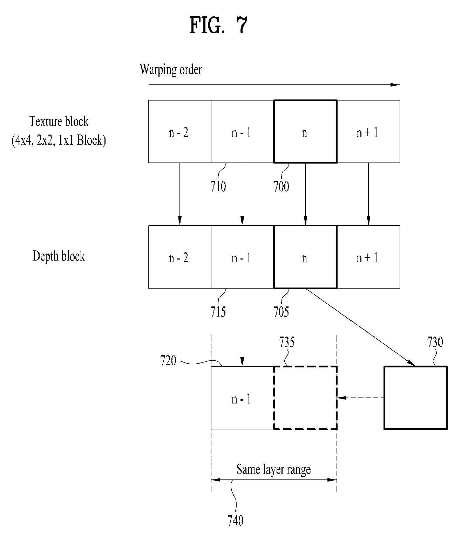

Therefore, the present invention proposes a method and an apparatus for correcting depth values such that only one depth layer is used in a process of warping a virtual reference picture in view synthesis prediction. A description will be given of a warping method for obtaining a virtual reference picture in view synthesis prediction, proposed by the present invention, with reference to FIGS. 6 and 7.

FIG. 6 is a flowchart illustrating an exemplary method for obtaining a virtual reference picture of view synthesis prediction according to an embodiment of the present invention.

An (N-1)-th unit (first reference block) may be warped so as to obtain an (N-1)-th virtual reference block (first virtual reference block) (610). In the following description, the (N-1)-th unit is a texture block in a reference view, used to obtain a virtual reference picture, and can be defined as a unit warped prior to warping of an N-th unit. The (N-1)-th virtual reference block can be defined as a block in the virtual reference picture, which has been warped using the (N-1)-th unit and a depth block corresponding to the (N-1) -th unit.

The N-th unit may be warped so as to obtain an N-th virtual reference block (S620). In the following description, the N-th unit (second reference block) is a texture block in the reference view, used to obtain the virtual reference picture, and can be defined as a unit warped after warping of the (N-1)-th unit. The N-th virtual reference block (second virtual reference block) can be defined as a block in the virtual reference picture, which has been warped using the N-th unit and a depth block corresponding to the N-th unit.

The position of the (N-1)-th virtual reference block and the position of the N-th virtual reference block may be compared (S630). It is possible to determine whether the order of the (N-1)-th virtual reference block and the N-th virtual reference block is inverted or whether the (N-1)-th virtual reference block and the N-th virtual reference block are spaced apart from each other by a predetermined distance or more, as shown in FIG. 5a or 5b, by comparing the position of the (N-1)-th virtual reference block and the position of the N-th virtual reference block.

As an exemplary method of comparing the position of the (N-1)-th virtual reference block and the position of the N-th virtual reference block, the position of a left-upper pixel of the (N-1)-th virtual reference block can be compared with a left-upper pixel of the N-th virtual reference block and the distance between the two pixels can be compared with a predetermined threshold value. Alternatively, the position of the center pixel of the (N-1)-th virtual reference block can be compared with the center pixel of the N-th virtual reference block and the distance between the two pixels can be compared with the predetermined threshold value. Here, the predetermined threshold value may be the width of the (N-1)-th virtual reference block. Alternatively, a comparison range may be set on the basis of the left-upper pixel of the (N-1)-th virtual reference block, and the position of the (N-1)-th virtual reference block and the position of the N-th virtual reference block may be compared by checking whether the left-upper pixel of the N-th virtual reference block is within the comparison range. Otherwise, a comparison range may be set on the basis of the center pixel of the (N-1)-th virtual reference block, and the position of the (N-1)-th virtual reference block and the position of the N-th virtual reference block may be compared by checking whether the center pixel of the N-th virtual reference block is within the comparison range. The method of comparing the position of the (N-1)-th virtual reference block and the position of the N-th virtual reference block is not limited to the aforementioned embodiment and can be implemented in various manners.

When it is determined that the order of the (N-1)-th virtual reference block and the N-th virtual reference block is inverted or the (N-1)-th virtual reference block and the N-th virtual reference block are spaced apart from each other by a predetermined distance or more from the result of S630, the position of the N-th virtual reference block may be corrected (S640). The position of the N-th virtual reference block may be corrected such that the N-th virtual reference block neighbors the (N-1)-th virtual reference block. Otherwise, the N-th virtual reference block may be positioned to correspond to the predetermined threshold value or the comparison range of S630.

An (N+1)-th unit may be warped so as to obtain an (N+1)-th virtual reference block (S650). The warping process may be performed until the virtual reference picture is obtained. In the following description, the (N-+)-th unit (third reference block) is a texture block in the reference view, used to obtain the virtual reference picture, and can be defined as a unit warped after warping of the N-th unit. The (N-1)-th virtual reference block (third virtual reference block) can be defined as a block in the virtual reference picture, which has been warped using the (N+1)-th unit and a depth block corresponding to the (N+1)-th unit.

If the order of the (N-1)-th virtual reference block and the N-th virtual reference block is not inverted or the (N-1)-th virtual reference block and the N-th virtual reference block are not spaced apart from each other by a predetermined distance or more, it is possible to obtain the (N+1)-th virtual reference block by warping the (N+1)-th unit without performing the step of correcting the position of the N-th virtual reference block (S650).

FIG. 7 illustrates an exemplary warping method of view synthesis prediction according to an embodiment of the present invention.

Prior to warping of an N-th unit 700 corresponding to a text block in a reference view, an (N-1)-th unit 710 can be warped into an (N-1)-th virtual reference block 720 using a depth block 715 corresponding to the (N-1)-th unit 710. The N-th unit 700 can be warped using a depth block 705 corresponding thereto. If an N-th virtual reference block 730 obtained through the warping process is not included in the same layer range 740, the position of the N-th virtual reference block 730 can be corrected such that the N-th virtual reference block 730 is positioned within the same layer range 740 so as to obtain a corrected reference block 735.

A virtual reference picture can be obtained using only one depth layer through the aforementioned method of obtaining a virtual reference picture of FIGS. 6 and 7. Accurate prediction values of the current unit can be obtained by performing view synthesis prediction using the virtual reference picture.

For accurate view synthesis prediction, it is important to obtain correct depth information used in a process of acquiring a virtual reference picture. A description will be given of a method for obtaining virtual depth information used to acquire a virtual reference picture in view synthesis prediction.

While texture information and depth information of a reference view are always present, depth information of a current view may or may not be present. If the depth information of the current view is not present, virtual depth information may be derived using the depth information of the reference view. The virtual depth information indicates depth information of a depth block positioned in the reference view. The virtual depth information can be obtained using an inter-view motion vector of a decoded current unit. However, when the inter-view motion vector of the current unit has not been decoded, the inter-view motion vector of the current unit can be obtained using an inter-view motion vector of a neighboring unit of the current unit. A virtual depth block can be obtained using an inter-view motion vector of the current unit, which has been acquired using the inter-view motion vector of the neighboring unit, and an inter-view motion vector of the current unit can be obtained using a depth value of the virtual depth block so as to perform view synthesis prediction.

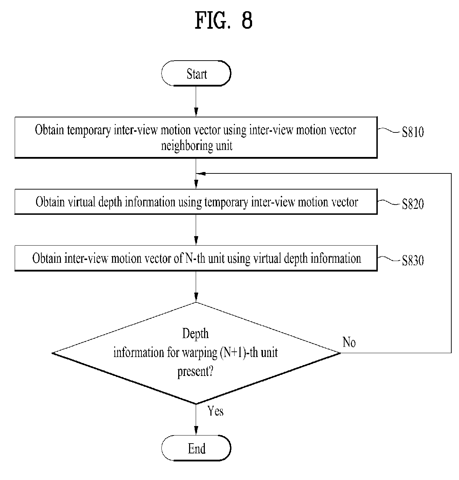

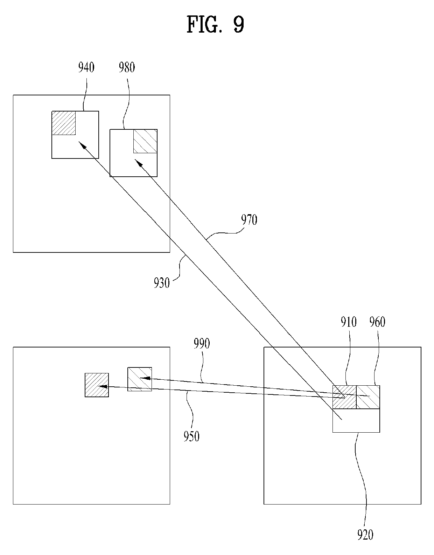

A description will be given of a method for obtaining an inter-view motion vector using virtual depth information in order to acquire a virtual reference picture when depth information for obtaining the virtual reference picture is not present in view synthesis prediction with reference to FIGS. 8 and 9.

FIG. 8 is a flowchart illustrating an example of obtaining an inter-view motion vector of an N-th unit using virtual depth information according to an embodiment of the present invention.

A temporary inter-view motion vector may be obtained using an inter-view motion vector of a neighboring unit (S810). Here, the neighboring unit may refer to a spatial or temporal neighboring unit of the N-th unit (first unit in the specification) warped according to view synthesis prediction. The temporary inter-view motion vector may refer to an inter-view motion vector used to obtain virtual depth information present in a reference view. If the neighboring unit is coded using the inter-view motion vector, the temporary inter-view motion vector corresponding to the N-th unit can be obtained using the inter-view motion vector of the neighboring unit.

Virtual depth information of the N-th unit may be obtained using the temporary inter-view motion vector (S820). The virtual depth information may be a depth value in a depth block of the reference view, indicated by the temporary inter-view motion vector. The temporary inter-view motion vector may include an inter-view motion vector of the N-th unit, which is obtained in S830 described later. The inter-view motion vector of the N-th unit can be used to obtain virtual depth information of an (N+1)-th unit (second unit in the specification).

The inter-view motion vector of the N-th unit may be obtained using the virtual depth information (S830). The virtual depth information may be one of a maximum value, a minimum value, an average value and a mode from among depth values of the depth block of the reference view. The inter-view motion vector of the N-th unit may be obtained using the virtual depth information. When the N-th unit includes sub-units, an inter-view motion vector may be acquired per sub-unit. A sub-unit is a lower prediction unit of the N-th unit and may have a size of 2N×N, N×2N or N×N.

When depth information for warping the (N+1)-th unit is not present, virtual depth information for warping the (N+1)-th unit may be obtained using the inter-view motion vector of the N-th unit, which has been acquired in S830, as a temporary inter-view motion vector as in S820. Then, an inter-view motion vector of the (N+1)-th unit may be obtained using the virtual depth information as in S830.

When depth information for warping the (N+1)-th unit is present, virtual depth information may not be obtained.

FIG. 9 illustrates an example of obtaining the inter-view motion vector of the N-th unit using virtual depth information according to an embodiment of the present invention.

When depth information of the current view, which corresponds to the N-th unit 910, is not present, a depth block 940 of a reference view can be obtained using an inter-view motion vector of a neighboring unit 920 of the N-th unit 910 as a temporary inter-view motion vector 930. A depth value of the depth block 940 of the reference view can be used as virtual depth information of the N-th unit 910. An inter-view motion vector 950 of the N-th unit can be obtained using the virtual depth information of the N-th unit 910. When the (N+1)-th unit is also coded using view synthesis prediction, depth information of the current view corresponding thereto is not present, and thus a depth block 980 of the reference view can be obtained using the inter-view motion vector 950 of the N-th unit as a temporary inter-view motion vector 970. A depth value of the depth block 980 of the reference view can be used as virtual depth information of the (N+1)-th unit 960. An inter-view motion vector 990 of the (N+1)-th unit can be obtained using the virtual depth information of the (N+1)-th unit 960.

Even when depth information corresponding to the same view as the N-th unit is not present, an inter-view motion vector for warping the N-th unit can be obtained through the method for obtaining virtual depth information, described with reference to FIGS. 8 and 9.

As the accuracy of depth information used to obtain a virtual reference picture increases, view synthesis prediction accuracy increases. Accordingly, it is very important to obtain depth information used to acquire an optimal virtual reference picture in order to increase view synthesis prediction accuracy. A description will be given of a method for obtaining depth information used to acquire an optimal virtual reference picture using depth block derivation information.

When the depth information is obtained in step S820, the depth information may be acquired using depth block derivation information. The depth block derivation information may refer to information indicating the position of a depth block for warping the N-th unit. The depth block derivation information may be obtained from a bitstream. The depth block derivation information may be obtained in such a manner that an encoder acquires optimal depth information for obtaining a virtual reference picture through encoding and transmits an inter-view motion vector indicating a depth block including the optical depth information to a decoder through a bitstream.

For example, when the depth block derivation information corresponding to the N-th unit is obtained, the position of a specific depth block can be acquired using the depth block derivation information. An inter-view motion vector for warping the N-th unit can be obtained using depth information corresponding to the specific depth block.

The depth block derivation information may indicate a neighboring block. For example, when a specific neighboring block is a block coded by deriving an inter-view motion vector, the position of a depth block can be obtained using the inter-view motion vector of the specific neighboring block. Then, the inter-view motion vector for warping the N-th unit can be obtained using depth information corresponding to the depth block.

When depth information is obtained using the depth block derivation information, view synthesis prediction accuracy can be improved by acquiring a virtual reference picture using optimal depth information.

A description will be given of a method for updating an inter-view motion vector.

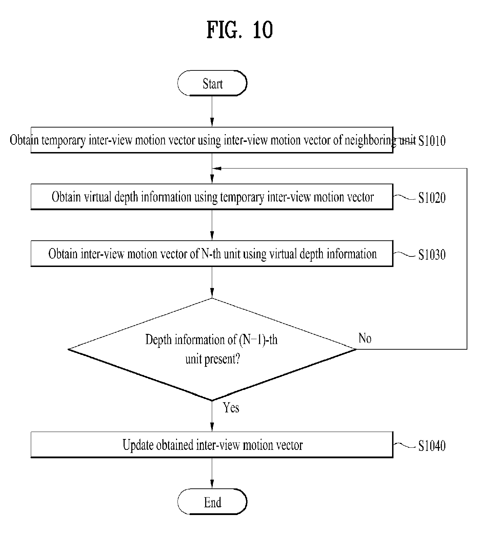

FIG. 10 is a flowchart illustrating an example of updating an inter-view motion vector according to an embodiment of the present invention.

A temporary inter-view motion vector corresponding to the N-th unit may be obtained using an inter-view motion vector of a neighboring unit (S1010). Here, the neighboring unit may refer to a spatial or temporal neighboring unit of the N-th unit (first unit in the specification). For example, the neighboring unit can be a left, upper, left-upper, right-upper or right-lower neighboring unit of the N-th unit. The temporary inter-view motion vector may refer to an inter-view motion vector used to obtain virtual depth information present in the reference view. If the neighboring unit is coded using the inter-view motion vector, the temporary inter-view motion vector corresponding to the N-th unit can be obtained using the inter-view motion vector of the neighboring unit.

Virtual depth information of the N-th unit may be obtained using the temporary inter-view motion vector (S1020). The virtual depth information refers to depth information corresponding to a depth block in a view different from the N-th unit, which is indicated by the temporary inter-view motion vector. A depth block of the reference view can correspond to a texture block of the reference view, which is indicated by the temporary inter-view motion vector. The temporary inter-view motion vector may include an inter-view motion vector of the N-th unit, which is obtained in step S1030 described later. The inter-view motion vector of the N-th unit can be used to obtain virtual depth information of the (N+1)-th unit (second unit in the specification). The (N+1)-th unit refers to a unit decoded or warped after the N-th unit.

The inter-view motion vector corresponding to the N-th unit may be obtained using the virtual depth information (S1030). The virtual depth information may be one of a maximum value, a minimum value, an average value and a mode from among depth values of the depth block of the reference view. The inter-view motion vector of the N-th unit may be obtained using the virtual depth information. When the N-th unit includes sub-units, an inter-view motion vector may be acquired per sub-unit. A sub-unit is a lower prediction unit of the N-th unit and may have a size of 2N×N, N×2N or N×N. For example, when the N-th unit includes 4 sub-units, 4 inter-view motion vectors can be obtained using virtual depth information of each sub-unit.

When depth information for warping the (N+1)-th unit is not present, virtual depth information for warping the (N+1)-th unit may be obtained using the inter-view motion vector of the N-th unit, which has been acquired in S1030, as a temporary inter-view motion vector as in S1020. Then, an inter-view motion vector of the (N+1)-th unit may be obtained using the virtual depth information as in S1030.

When depth information for warping the (N+1)-th unit is present, virtual depth information may not be obtained.

The inter-view motion vector obtained through steps S1010 to 1030 may be updated (stored) (S1040). Here, update of the inter-view motion vector refers to storing of the inter-view motion vector to use the inter-view motion vector to decode prediction units including the N-th unit. The updated inter-view motion vector may include an inter-view motion vector obtained using depth block derivation information.

For example, inter-view motion vectors of 4 sub-units, acquired in step S1030, can be updated for a process of decoding prediction units other than the N-th unit. The inter-view motion vector corresponding to the N-th unit may be updated such that the inter-view motion vector is included in a motion vector list of the N-th unit.

The updated inter-view motion vector may be used to decode a prediction unit (not shown). For example, one of updated inter-view motion vectors of sub-units can be used to obtain an inter-view motion vector corresponding to a prediction unit decoded after the N-th unit. The inter-view motion vector corresponding to the N-th unit, which is included in the motion vector list, may be used to obtain prediction values of the N-th unit.

For example, an inter-view motion vector used to warp the N-th unit in view synthesis prediction can be obtained using one of updated inter-view motion vectors.

Alternatively, an inter-view motion vector indicating a depth block including depth information for warping the N-th unit in view synthesis prediction can be obtained using one of the updated inter-view motion vectors.

As a method for selecting one of the updated inter-view motion vectors, indices can be allocated to the inter-view motion vector in order of updating the inter-view motion vectors and an inter-view motion vector indicated by an inter-view motion vector selection index can be used for decoding or warping.

As described above, a decoding/encoding apparatus to which the present invention is applied may be included in a multimedia broadcast transmission/reception apparatus such as a DMB (digital multimedia broadcast) system to be used to decode video signals, data signals and the like. In addition, the multimedia broadcast transmission/reception apparatus may include a mobile communication terminal.

A decoding/encoding method to which the present invention is applied may be implemented as a computer-executable program and stored in a computer-readable recording medium and multimedia data having a data structure according to the present invention may also be stored in a computer-readable recording medium. The computer-readable recording medium includes all kinds of storage devices storing data readable by a computer system. Examples of the computer-readable recording medium include a ROM, a RAM, a CD-ROM, a magnetic tape, a floppy disk, an optical data storage device, and a medium using carrier waves (e.g. transmission through the Internet). In addition, a bitstream generated according to the encoding method may be stored in a computer-readable recording medium or transmitted using a wired/wireless communication network.

### [Industrial Applicability]

The present invention can be used to code a video signal.

## Claims

1. A method for processing a video signal, comprising:
obtaining a temporary inter-view motion vector corresponding to a first unit;
obtaining virtual depth information corresponding to the first unit using the temporary inter-view motion vector;
obtaining an inter-view motion vector corresponding to the first unit using the virtual depth information corresponding to the first unit; and
updating the inter-view motion vector corresponding to the first unit.

2. The method according to claim 1, wherein the temporary inter-view motion vector is obtained using an inter-view motion vector corresponding to a neighboring unit of the first unit.

3. The method according to claim 1, wherein the virtual depth information is depth information of a depth block of a view different from the first unit.

4. The method according to claim 1, wherein the updating of the inter-view motion vector comprises including the inter-view motion vector corresponding to the first unit in a motion vector list of the first unit.

5. The method according to claim 1, further comprising obtaining an inter-view motion vector corresponding to a second unit using the updated inter-view motion vector.

6. The method according to claim 1, further comprising:
obtaining a temporary inter-view motion vector corresponding to a second unit using the inter-view motion vector corresponding to the first unit;
obtaining virtual depth information corresponding to the second unit using the temporary inter-view motion vector corresponding to the second unit; and
obtaining an inter-view motion vector corresponding to the second unit using the virtual depth information corresponding to the second unit.

7. The method according to claim 5, further comprising updating the inter-view motion vector corresponding to the second unit.

8. The method according to claim 1, further comprising obtaining a first virtual reference block using the inter-view motion vector corresponding to the first unit,
wherein the first virtual reference block is included in a virtual reference picture for view synthesis prediction.

9. An apparatus for processing a video signal, comprising:
an inter-prediction unit configured to obtain a temporary inter-view motion vector corresponding to a first unit, to obtain virtual depth information corresponding to the first unit using the temporary inter-view motion vector, to obtain an inter-view motion vector corresponding to the first unit using the virtual depth information corresponding to the first unit and to update the inter-view motion vector corresponding to the first unit.

10. The apparatus according to claim 8, wherein the temporary inter-view motion vector is obtained using an inter-view motion vector corresponding to a neighboring unit of the first unit.

11. The apparatus according to claim 8, wherein the virtual depth information is depth information of a depth block of a view different from the first unit.

12. The apparatus according to claim 8, wherein the inter-prediction unit is configured to include the inter-view motion vector corresponding to the first unit in a motion vector list of the first unit.

13. The apparatus according to claim 9, wherein the inter-prediction unit is configured to obtain an inter-view motion vector corresponding to a second unit using the updated inter-view motion vector.

14. The apparatus according to claim 9, wherein the inter-prediction unit is configured to obtain a temporary inter-view motion vector corresponding to a second unit using the inter-view motion vector corresponding to the first unit, to obtain virtual depth information corresponding to the second unit using the temporary inter-view motion vector corresponding to the second unit and to obtain an inter-view motion vector corresponding to the second unit using the virtual depth information corresponding to the second unit.

15. The apparatus according to claim 14, wherein the inter-prediction unit is configured to update the inter-view motion vector corresponding to the second unit.

16. The apparatus according to claim 9, wherein the inter-prediction unit is configured to obtain a first virtual reference block using the inter-view motion vector corresponding to the first unit,
wherein the first virtual reference block is included in a virtual reference picture for view synthesis prediction.
